# EUROPÄISCHE PATENTANMELDUNG

(11) **EP 3 816 748 A1**
(43) Veröffentlichungstag der Anmeldung: **05.05.2021**
(21) Anmeldenummer: 20200994.0
(22) Anmeldetag: 09.10.2020
(51) Int. Cl.: G05B 19/418

(54) **BEARBEITUNGSANLAGE**

(30) Priorität: 11.10.2019 DE 102019215640
(71) Anmelder: Schäfer Werkzeug- und Sondermaschinenbau GmbH, 76669 Bad Schönborn (DE)
(72) Erfinder: Wuhrer, Alexander, 76669 Bad Schönborn-Langenbrücken (DE); Catalano, Daniel, 76669 Bad Schönborn-Langenbrücken (DE); Schäfer, Alexander, 76669 Bad Schönborn-Langenbrücken (DE); Neubauer, Stefan, 76669 Bad Schönborn-Langenbrücken (DE)
(74) Vertreter: Hoffmann Eitle

(57) **Zusammenfassung**

Die Erfindung betrifft eine Bearbeitungsanlage mit einen Arbeitsbereich mit Plätzen für Bearbeitungszellen, zumindest eine Bearbeitungszelle mit einer Bearbeitungseinrichtung zur Verarbeitung einer Komponente, insbesondere einer Leitung und/oder eines Kontaktelements, wobei die Bearbeitungszelle im Arbeitsbereich positioniert ist, eine bewegbare Handhabungseinheit, die eine Manipulationseinheit zum Halten der Komponente aufweist, um die Komponente in den Bereich der Bearbeitungseinrichtung zu bewegen, und eine Erfassungseinheit, die eingerichtet ist, die Position der Bearbeitungszelle im Arbeitsbereich zu erfassen.

## Beschreibung

### Technisches Gebiet

Die Erfindung betrifft eine Bearbeitungsanlage mit zumindest einer Bearbeitungszelle zur Bearbeitung von Leitungen und/oder Bauteilen sowie zugehörigen Untereinheiten, beispielsweise zum Ancrimpen von Leiterkontakten an einer Leitung.

### Stand der Technik

Globale Trends, wie z.B. das autonome Fahren, bedingen Veränderungen der heutigen Fertigungs- und Produktionsprozesse. Die Forderungen nach einer flexiblen Produktion werden nicht zuletzt durch den Trend der Individualisierung (schnell wechselnde Lösgröße "1") und auch von dem weltweit zunehmenden Digitalisierungsgrad und den damit verbundenen hohen Datenmengen angetrieben.

Bei der Verarbeitung von Leitungen und Kontaktteilen und diversen Bauteilen wird durch innovative Anforderungen, insbesondere im Bereich der Automobil- und Konsumer-Industrie sowie im urbanen Raum, verstärkt eine größere Variantenvielfalt gefordert.

Aktuelle Bearbeitungs-Vollautomaten sind spezialisiert auf eine stark eingegrenzte Produktgruppe und/oder Abläufe. Vollautomaten sind entsprechend hinsichtlich einer ausgeprägten Produkt-Variantenvielfalt und einer hohen Flexibilität stark eingeschränkt. Anpassungen oder Änderungen an Bauteilen oder Abläufen erzeugen lange Maschinen-Stillstand-Zeiten und Kosten. Kommen Teil- oder Untereinheiten neu hinzu oder müssen solche ausgetauscht werden, erfolgt meistens eine vollständige Stillsetzung der Vollautomaten. Eine vergrößerte Variantenvielfalt bzw. neue Produkte auch anderer Märkte erfordern wiederum neue Ansätze und neue Funktionen bei der Produktion und Qualitätssicherung der zu fertigenden Produkte.

Hinzu kommen neue Geometrien z.B. durch Einsatz in der E-Mobilität mit Y-Form Mehrfach-Verbinder und mehrstufigen oder mehrpoligen geschirmten oder kombinierten Leitungen. Im Bereich der weißen Ware entstehen durch die Erneuerung von bisherigen Anwendungen zu neuen Anwendungen, z.B. Smart Home, neue elektronische Komponenten. Im urbanen Raum bringt die Digitalisierung, z.B. XtoX Kommunikation, die Digitalisierung der Verkehrswege, neue intelligente Produkte mit sich. Alle Produktgruppen gemeinsam unterliegen der Schnelllebigkeit. Schnelllebigkeit bedeutet in Bezug auf die Automatisation geringere Laufzeit und geringere Stückzahlen.

Für all diese zuvor genannten Produkte ist die Erkennung und lagerrichtige Bewegung, Positionierung sowie evtl. das Fügen und Verbinden der Bauteile notwendig. Eine Verbindung beispielweise mit einer Daten- oder Energieleitungen in Kombination mit einem miniaturisierten elektronischen Leiterplatten-Verbinder erfordert neue innovative Bearbeitungsansätze. Weiterhin müssen beim "autonomen Fahren" vermehrt Einzelbauteile als sicherheitskritische Bauteile eingestuft werden. Diese Bauteile müssen entsprechend nachgewiesen und dokumentiert vollautomatisiert gefertigt werden, auch bei schnell wechselnder Lösgröße "1".

Oft sind die genannten Kontakt-, Bauteilteile als nicht gegurtete, ausgerichtete Ware vorhanden und müssen der entsprechenden Bearbeitungsposition lagerichtig zugeordnet werden. Bei der händischen Fertigung muss z.B. ein Werker dabei in den Bearbeitungsbereich, d.h. in den aktiven Bereich einer Crimpvorrichtung, ein Teil einlegen. Hierzu muss die Anlage sicher abgeschaltet sein, was zusätzliche Bearbeitungszeit und Zusatzkosten ergibt.

Weitere Teile können z.B. Blechteile, Gehäuse oder Kontakte, Leiterplatten oder vorbestückte Träger sein. Auch können solche Teile als Rohr oder in einer offenen Form zur Aufnahme weiterer Teile vorhanden sein. Es ist nicht zwingend notwendig, dass eine Leitung mit dem Kontakt, -Bauteil verbunden wird, es können auch Kontakte und/oder Bauteile untereinander verbunden werden. Es ist weiter möglich, dass die Verbindung untereinander durch einpressen, Verschweißen, Verlöten oder weiteren kontaktierenden Aktionen erfolgt.

Eine Einzelleitung, die oftmals aus mehreren hundert Einzellitzen besteht, kann hierfür in einen rohrförmigen Abschnitt des entsprechenden Kontakts, -Bauteils eingeschoben oder in ein oben offenen/s Kontakt, -Bauteil eingelegt und mit der Leitung verpresst werden. Bei einer nicht 100%-igen Positionierung könnte z.B. eine Einzellitze seitlich abstehen und später eine ungewollte Verbindung eingehen. Besteht die Leitung aus mehreren Einzelleitungen erhöht sich das Positionsproblem. Bisher wurde eine Dokumentation der Leitung,- Kontakt,-Bauteillage insbesondere zueinander bei diesen zuvor genannten Vorgängen allerdings nicht erstellt.

Die steigende Diversität führt zu komplexen und variablen Fertigungsprozessen. Entsprechend steigen auch die Anforderungen an universelle, flexible Verarbeitungseinrichtungen. Eine Qualitätssicherung, um eine möglichst lückenlose Dokumentation und Rückverfolgbarkeit bis auf das Rohmaterial der gefertigten Produkte zu gewährleisten, ist zwingend zur Sicherstellung und Überprüfbarkeit der Güte, auch im Falle einer Rückrufaktion, notwendig.

### Gegenstand der Erfindung

Ziel der Erfindung ist es, eine Bearbeitungsanlage bereitzustellen, die bei hoher Flexibilität ein maximales Qualitätsniveau gewährleistet, sowie dass eine Rückverfolgbarkeit jedes einzelnen produzierten Artikels (Artikel = die Kombination von Teilen) bei maximaler Datensicherung gewährleistet wird.

Der Gegenstand des Anspruchs 1 stellt eine entsprechende Bearbeitungsanlage bereit. Weitere bevorzugte Ausführungsformen sind in den abhängigen Ansprüchen aufgeführt.

Bei der Bearbeitungszelle kann es sich um eine Bearbeitungszelle mit einer Bearbeitungseinrichtung zur Verbindung einer Leitung mit einem Kontaktbauteil handeln, insbesondere einer Crimpvorrichtung. Zu verarbeitende Gegenstände, wie die genannte Leitung bzw. das Kontaktbauteil, werden auch als "Komponente" bezeichnet. Auch können als zu verarbeitende Komponenten z.B. Schirmgehäuse, Platinen, Kontakte, Stecker und Steckverbinder oder ähnliche Bauteile mit solchen Teileinheiten zueinander verbunden werden. Des Weiteren könnten einzelne oder mehrere angecrimpte Bauteile, z.B. Kontakte, lagerichtig und genau positioniert werden. Diese Positionierung wird zur weiteren Verarbeitung und/oder zum Fügen in/an andere Komponenten / Bauteile benötigt. Die im Zuge der Bearbeitung durchgeführten Schritte sind insbesondere ausgewählt aus einem Zusammensetzen, Fügen, Verbinden, Bewegen und Positionieren.

Die erfindungsmäße Bearbeitungsanlage zeichnet sich durch ihre Modularität aus, die es ermöglicht, die Bearbeitungsanlage spezifisch zu modifizieren und an sich ändernde Arbeitsaufträge anzupassen. Auf diese Weise wird eine hohe Flexibilität bereitgestellt. Darüber hinaus kann die mit einer Bearbeitungsanlage mögliche Wertschöpfung zukunftssicher gestaltet und im Bedarfsfall adaptiert werden.

Ferner kann die Bearbeitungsanlage nachgerüstet werden, indem eine Bearbeitungszelle ergänzt oder eine bestehende Bearbeitungszelle durch eine neue Bearbeitungszelle ersetzt wird. Auch ist es möglich, eine bereits vorhandene Bearbeitungszelle in die Bearbeitungsanlage zu integrieren. Ferner ist es durch ein Steuerprogramm und eine Bedienoberfläche bevorzugt möglich, dass eine neu in die Bearbeitungsanlage aufgenommene Bearbeitungszelle durch einen Bediener oder ein Steuergerät in Bearbeitungsabläufe in der Bearbeitungsanlage integriert werden kann.

Die Erfindung stellt eine Bearbeitungsanlage bereit, die aufweist: einen Arbeitsbereich mit Plätzen für Bearbeitungszellen, zumindest eine Bearbeitungszelle mit einer Bearbeitungseinrichtung zur Verarbeitung einer Komponente, insbesondere einer Leitung und/oder eines Kontaktelements, wobei die Bearbeitungszelle im Arbeitsbereich positioniert ist, eine bewegbare, insbesondere schwenkbare, Handhabungseinheit, die eine Manipulationseinheit zum Halten des Artikels aufweist, um den Artikel in den Bereich der Bearbeitungseinrichtung zu bewegen, und eine Erfassungseinheit, die eingerichtet ist, die Position der Bearbeitungszelle im Arbeitsbereich zu erfassen.

Gemäß einer bevorzugten Ausführungsform ist die Erfassungseinheit an der Handhabungseinheit angeordnet. Somit kann die Erfassungseinheit in den Bereich der Bearbeitungszelle geführt und diese dadurch erfasst werden. Die Erfassung der Bearbeitungszelle kann dabei beispielsweise mittels eines an der Bearbeitungszelle vorgesehenen Kennzeichnungselements erfolgen.

Es ist bevorzugt, dass die Erfassungseinheit eine Kamera aufweist, um die Bearbeitungszelle mittels eines optischen Verfahrens zu erfassen. In diesem Zusammenhang kann die Kamera als 2D- oder 3D-Kamera ausgebildet sein.

In einer bevorzugten Ausführungsform ist es vorgesehen, dass die Bearbeitungszelle eine wechselbare Bearbeitungseinrichtung aufweist. Somit kann die Bearbeitungseinrichtung, beispielsweise zu Wartungszwecken, getauscht werden. Der Betrieb der Bearbeitungsanlage kann nach dem Austausch weitergeführt werden. Somit werden Nebenzeiten deutlich reduziert.

Es ist bevorzugt, dass ein an der Bearbeitungszelle und/oder die Bearbeitungseinrichtung vorgesehenes Kennzeichnungselement, insbesondere umfassend einen Barcode, QR-Code, RFID-Chip, vorgesehen ist. Auf diese Weise kann die Bearbeitungszelle eindeutig gekennzeichnet werden. Dies kann bei der Erfassung der Bearbeitungszelle durch die Erfassungseinheit genutzt werden.

Dabei ist es besonders bevorzugt, dass das Kennzeichnungselement auf einen in einer Speichereinheit hinterlegten Datensatz verweist, so dass einer Steuerung der Bearbeitungsanlage weiterführende Informationen zur Verfügung gestellt werden können.

Gemäß einer weiteren Ausführungsform zeichnet sich die Bearbeitungsanlage dadurch aus, dass die Handhabungseinheit eingerichtet ist, der mit der Erfassungseinheit erfassten Komponenten mittels der Manipulationseinheit zu übernehmen und zur Bearbeitungszelle zu bewegen.

Insbesondere kann die Manipulationseinheit ein Greifer sein, der die Komponente, beispielsweise eine Leitung oder ein Kontaktelement, greifen kann. Ferner ist bevorzugt, dass die Manipulationseinheit zusätzlich eine Zuführmaske umfasst, die mit der Bearbeitungseinheit der Bearbeitungszelle koppelbar ist. Auf diese Weise wird eine Übergabe der Komponenten erleichtert. Beispielsweise kann eine Zuführmaske beim "Einfädeln" einer dünnen Litze hilfreich sein.

Die Bearbeitungseinrichtung der Bearbeitungszelle kann eine Crimpvorrichtung umfassen, mit der eine Leitung mit einem Kontaktelement versehen werden kann.

Es ist bevorzugt, dass die zumindest eine Bearbeitungszelle mit einem, insbesondere optisch oder taktil erfassbaren, Referenzierungssystem ausgestattet ist, das von der Erfassungseinheit erfassbar ist. Auf diese Weise kann eine Steuerung der Manipulationseinheit weiter verfeinert werden.

In einer Ausführungsform sind die Plätze für Bearbeitungszellen im Arbeitsbereich kreisförmig angeordnet. Somit kann die Manipulationseinheit, die bevorzugt einen Roboterarm umfasst, geschwenkt werden, um einen Komponente der Bearbeitungszelle zuzuführen. Mit der kreisförmigen Anordnung können dabei möglichst kurze Wege zwischen benachbarten Bearbeitungszellen oder -stationen gewährleistet werden.

Dabei können die Plätze für Bearbeitungszellen Segmente der kreisförmigen Anordnung sein. Hierbei kann es sich um definierte Segmente (mit bestimmten Winkelbereich) oder um variable Segmente handeln.

Es ist bevorzugt, dass die Bearbeitungsanlage einen Bedienbereich umfasst. Somit kann eine Bedienung im Bereich der Bearbeitungsanlage erfolgen. Dabei ist es ferner bevorzugt, dass der Bedienbereich durch eine Schutzeinrichtung vom Arbeitsbereich getrennt ist, so dass eine gefahrenfreie Bedienung ermöglicht wird. Die Schutzeinrichtung kann abschnittsweise transparent sein.

Somit ist es möglich, die Bearbeitungsvorgänge bei Bedarf auch visuell zu überwachen.

Die Handhabungseinheit kann eine Sende-/Empfangseinrichtung aufweisen, um auf eine Speichereinheit der Bearbeitungsanlage zuzugreifen. Auf diese Weise wird die Flexibilität der Bearbeitungsanlage nochmals gesteigert.

Es ist bevorzugt, dass die Bearbeitungsanlage eine Vielzahl von Bearbeitungszellen aufweist. Eine zu verarbeitender Komponente kann mit der Manipulationseinheit von Bearbeitungszelle zu Bearbeitungszelle überführt werden. Eine Bearbeitungszelle kann jedoch bei Bedarf aus der Bearbeitungsanlage entnommen und gegebenenfalls durch eine andere Bearbeitungsanlage ersetzt werden.

Dabei kann es vorgesehen sein, dass sich Bearbeitungseinrichtungen der Bearbeitungszellen voneinander unterscheiden. Somit sind die Bearbeitungseinrichtungen für unterschiedliche Bearbeitungsvorgänge vorgesehen, die separat oder im Zuge eines Bearbeitungsvorgangs mit einer bestimmten Komponente durchgeführt werden können.

In einer weitere Ausführungsform kann die Bearbeitungsanlage eine Übergabestation umfassen, über die zu verarbeitende Komponenten zugeführt und/oder entnommen werden können. Wenn mehrere Übergabestationen vorgesehen sind, insbesondere eine Zuführstation und eine Entnahmestation, können diese an entgegengesetzten Plätzen des Arbeitsbereichs vorgesehen sein. Die Bearbeitungszelle oder die Bearbeitungszellen können in diesem Fall zwischen den Übergabestationen angeordnet sein.

Zumindest eine Bearbeitungszelle kann beweglich gestaltet sein. Beispielsweise ist die Bearbeitungszelle als bewegbarer (beispielsweise mit Rollen ausgestatteter) Wagen ausgestaltet. Alternativ oder zusätzlich kann die Bearbeitungszelle von einem fahrerlosen Transportsystem übernommen werden.

Gemäß einer weiteren Ausführungsform umfasst die Bearbeitungsanlage eine Steuereinrichtung, die ein Steuerprogramm mit modularen Programmelementen umfasst. Insbesondere kann ein Auftrags-Editor-Programm in der Steuereinrichtung hinterlegt sein, das die Zusammenstellung von Bearbeitungsabläufen ermöglicht. Insbesondere können Bearbeitungsabläufe gespeichert und/oder aufgerufen/verwendet werden. Auf diese Weise kann die modulartig ausgebildete Bearbeitungsanlage mit vergleichsweise geringem Aufwand an sich ändernde Umstände angepasst und zügig in einen betriebsbereiten Zustand versetzt werden.

Das Auftrags-Editor-Programm, und insbesondere die modularen Programmelemente, kann (können) beispielsweise anhand einer Test-Bearbeitungsanlage weiter verbessert und/oder erweitert werden. Derart verbesserte oder ergänzte Programmelemente des Auftrags-Editor-Programms können einem Nutzer zur Verfügung gestellt werden. Somit ist es für en Nutzer möglich, das Steuerprogramm je nach Bedarf anzupassen und/oder zu erweitern.

Dabei kann es vorgesehen sein, dass ein zusätzliches oder geändertes Programmelement in einer Cloud bereitgestellt wird. Dies hat den Vorteil, dass ein Nutzer ortsunabhängig und je nach Bedarf Zugriff auf die entsprechenden Dateien hat. Somit kann die Modularität der Bearbeitungsanlage weiter flexibilisiert werden.

Die Programmelemente können dabei zur sequentiellen und/oder parallelen Ausführung zusammengestellt werden.

Gemäß einer weiteren Ausführungsform wird ferner eine Verwendung bereitgestellt. Dabei kann die Verwendung die Bedienung eines Steuerprogramms mit modularen Programmelementen umfassen, das zur Steuerung einer Bearbeitungsanlage gemäß einem der vorangegangenen Aspekte eingerichtet ist.

### Kurze Beschreibung der Zeichnung

- Fig. 1: ist eine perspektivische Darstellung einer Ausführungsform einer erfindungsgemäßen Bearbeitungsanlage.
- Fig. 2: zeigt eine schematische Draufsicht der in Fig. 1 dargestellten Bearbeitungsanlage.
- Fig. 3: zeigt eine Anzeigeeinrichtung zur Veranschaulichung einer Ausführungsform eines Auftrags-Editor-Programms zur Steuerung der Bearbeitungsanlage.

### Detaillierte Beschreibung der bevorzugten Ausführungsformen

Anhand der Figuren wird eine bevorzugte Ausführungsform der Erfindung beschrieben. Obwohl die Ausführungsform rein beispielhaft, und nicht einschränkend, zu verstehen ist, können Einzelmerkmale der Ausführungsform zur Spezifizierung der Erfindung herangezogen werden. Ferner können Modifikationen der nachfolgend beschriebenen Ausführungsformen jeweils einzeln miteinander kombiniert werden, um weitere Ausführungsformen der Erfindung auszubilden.

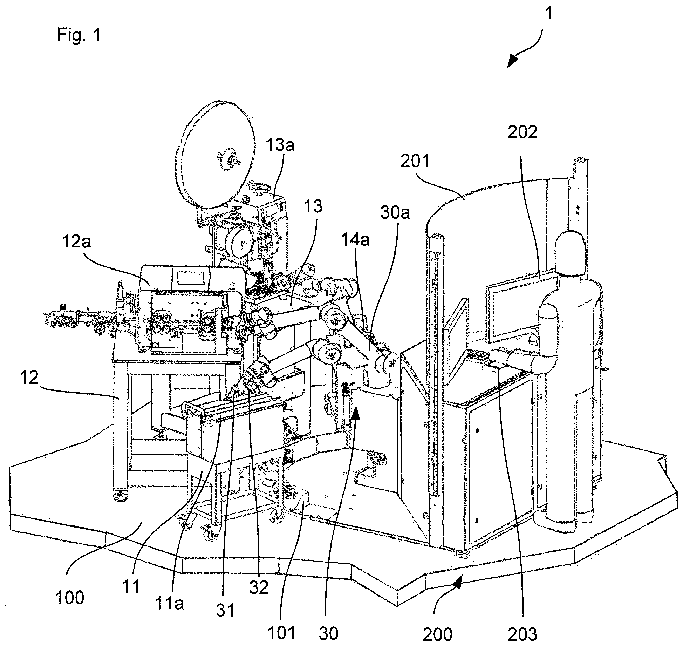

Figur 1 zeigt eine perspektivische Darstellung eines Beispiels einer Bearbeitungsanlage gemäß der Erfindung. Die Bearbeitungsanlage 1 kann beispielsweise in einem Fabrikgebäude angeordnet sein, wobei der dargestellte Bereich mit einer Absperrung oder Umzäunung gegen unberechtigtes Eindringen in die Bearbeitungsanlage gesichert sein kann. Gemäß einer anderen Ausführungsform kann einem Arbeiter auch Zugang zur Bearbeitungsanlage gewährt werden. Hierfür sind beispielsweise Sensoren an den nachfolgend beschriebenen Baugruppen angebracht, um die Sicherheit des Arbeiters in der Bearbeitungsanlage zu gewährleisten. Derartige Sensoren können berührungslos arbeiten, oder die Sensoren können als taktile Sensoren ausgebildet sein.

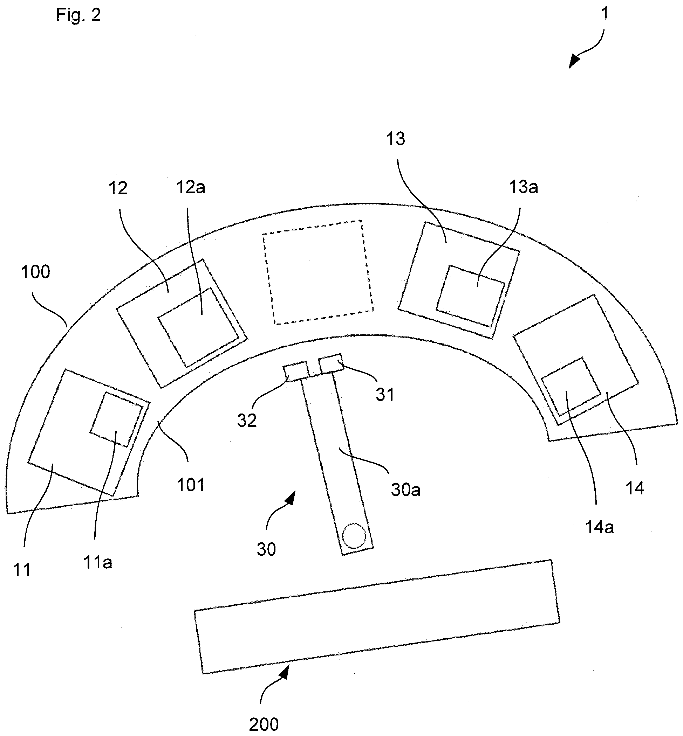

Die in Figur 1 sowie in Figur 2 dargestellte Anordnung der nachfolgend beschriebenen Baugruppen kann flexibel in anderen Ausführungsformen variiert werden. Auch können beispielsweise weitere Teileinheiten / Bearbeitungszellen hinzugefügt werden, um die Variantenvielfalt weiter zu erhöhen.

Die Bearbeitungsanlage 1 umfasst einen Arbeitsbereich 100, der in Form eines Kreissegments ausgebildet ist und einen Anschlussbereich 101 zur Ankopplung mehrerer nachfolgend beschriebener Stationen sowie Bearbeitungszellen umfasst. Benachbart zum Arbeitsbereich 100 ist ein Bedienbereich 200 vorgesehen, der durch eine Schutzeinrichtung 201 vom Arbeitsbereich 100 getrennt ist. Die Schutzeinrichtung 201 ist als Schutzzaun ausgebildet, der eine gefahrenfreie Bedienung der Bearbeitungsanlage 1 im Bereich des Bedienbereichs 200 ermöglicht.

Im Bedienbereich 200 ist eine Anzeigeeinrichtung 202 sowie eine Eingabeeinrichtung 203 vorgesehen, die es einem Bediener ermöglichen, auf Arbeitsvorgänge einzuwirken, oder diese zu verändern, wobei die Arbeitsvorgänge beispielsweise bereits durch eine zentrale Steuerung vorgegeben oder lokal mit einem Auftrags-Editor-Programm zusammengestellt wurden. Auch kann ein Bediener Arbeitsvorgänge vom Bedienbereich 200 visuell überwachen.

Zwischen dem Arbeitsbereich 100 und dem Bedienbereich 200 ist eine Handhabungseinheit 30 angeordnet, die einen schwenkbaren Roboterarm 30a umfasst. Zusätzlich zur Schwenkbarkeit um eine vertikal ausgerichtete Schwenkachse weist der Roboterarm 30a weitere Achsen auf.

Der Roboterarm 30a nimmt eine Manipulationseinheit 31 (Greifer) sowie eine Erfassungseinheit 32 auf. Die Erfassungseinheit 32, die insbesondere als Kamera ausgebildet ist, ist eingerichtet, mittels eines nicht-taktilen, insbesondere optischen, Verfahrens Informationen aufzunehmen, beispielsweise ein lokales Koordinatensystem oder eine an einer Bearbeitungszelle angebrachte weiterführende Information aufzunehmen. In einer weiteren Ausführungsform kann die Erfassungseinheit auch eingerichtet sein, einen RFID-Code auszulesen.

Gemäß einer Modifikation der Ausführungsform kann die Erfassungseinheit 32 auch als eine mit einem taktilen Verfahren arbeitende Erfassungseinheit ausgebildet sein.

Im Arbeitsbereich 100 sind eine Zuführstation 11 (eine erste Übergabestation), eine erste Bearbeitungszelle 12, eine zweite Bearbeitungszelle 13 sowie eine Entnahmestation 14 (eine zweite Übergabestation) angeordnet und mit dem Anschlussabschnitt 101 gekoppelt. Die genannten Einheiten sind jeweils als Tisch oder Konsole ausgebildet, die im Arbeitsbereich 100 auf dem Boden angeordnet ist.

Dabei sind die Bearbeitungszellen 12, 13 sowie die Zuführstation 11 und Entnahmestation 14 beweglich ausgebildet, so dass diese Einheiten zum Anschlussabschnitt 101 bewegt und dort mit diesem gekoppelt werden können. Eine Bewegung der Bearbeitungszellen 12, 13 sowie die Zuführstation 11 und Entnahmestation 14 kann manuell oder mittels eines Fahrzeugs, beispielsweise eines fahrerlosen Transportsystem (nicht dargestellt) erfolgen.

In dem in Figur 1 gezeigten Ausführungsbeispiel ist die Zuführstation 11 mit Rollen ausgestattet, um eine Bewegbarkeit der Zuführstation 11 bereitzustellen.

Die Bearbeitungszelle 12 kann von einer Hubeinrichtung, beispielsweise einer Hubeinrichtung eines fahrerlosen Transportsystems, aufgenommen und die Bearbeitungszelle 12 nachfolgend bewegt werden.

Gemäß einer Modifikation kann die Bearbeitungszelle 12 und/oder die Bearbeitungszelle 13 als fahrbarer Wagen ausgebildet sein.

Mittels der Kopplung der Zuführstation 11, der ersten Bearbeitungszelle 12, der zweiten Bearbeitungszelle 13 sowie der Entnahmestation 14 am Anschlussabschnitt 101 können Informationen und/oder Energie zu den genannten Einheiten übertragen werden. Insbesondere kann der Steuerung als Information mitgeteilt werden, dass an einem bestimmten Platz der Bearbeitungsanlage eine Einheit angeordnet ist und sich diese Einheit in einem betriebsbereiten Zustand befindet.

Die Zuführstation 11 ist als Tisch ausgebildet und umfasst eine an einer definierten Position des Tisches angeordnete Zuführeinrichtung 11a, in der mittels der Bearbeitungsanlage zu verarbeitende Komponente, beispielsweise ein Crimpkontakt oder eine Leitung, zugeführt und von der Manipulationseinheit 31 übernommen werden können. Die Artikel und/oder Komponenten können dabei von einer vorgelagerten Einheit zielgerichtet bereitgestellt werden.

Die erste Bearbeitungszelle 12 ist ebenfalls als Tisch ausgebildet und umfasst eine erste Bearbeitungseinrichtung 12a, die zur Zufuhr und Bearbeitung von Leitungen verwendet wird. Die Handhabungseinheit 30 kann derart bewegt werden, dass die Manipulationseinheit 31 Zugriff auf die durch die erste Bearbeitungszelle bereitgestellten Leitungen hat.

Der neben der ersten Bearbeitungszelle 12 vorgesehene Platz ist im Ausführungsbeispiel nicht belegt und kann bei Bedarf durch eine dritte Bearbeitungszelle, beispielsweise eine Prüfstation, ergänzt werden.

Benachbart hierzu ist eine zweite Bearbeitungszelle 13 vorgesehen, die als Tisch ausgebildet ist und eine zweite Bearbeitungseinrichtung 13a, insbesondere eine Crimpeinrichtung, umfasst, mit der die durch die Manipulationseinheit 31 der Handhabungseinheit 30 übergebenen oder im Bereich der zweiten Bearbeitungseinrichtung 13a bereitgestellten Leitungen mit einem Crimpkontakt versehen werden können.

Benachbart zur zweiten Bearbeitungszelle 13 ist eine Entnahmestation 14 vorgesehen, die eine Entnahmeeinrichtung 14a (Übergabeeinrichtung) umfasst. Die Handhabungseinheit 30, beziehungsweise der Roboterarm 30a, ist derart bewegbar, dass die von der Manipulationseinheit 31 gehaltenen Leitungen der Entnahmeeinrichtung 14a zugeführt werden können. Von der Entnahmeeinrichtung 14a können die in der Bearbeitungsanlage 1 verarbeiteten Gegenstände einer im Produktionsprozess nachrangig angeordneten Bearbeitungsmaschine zugeführt werden. Auch kann eine Übergabe an eine Robotereinheit (nicht dargestellt) erfolgen.

Die Zuführstation 11, die erste Bearbeitungszelle 12, die zweite Bearbeitungszelle 13 sowie die Entnahmestation 14 sind im Arbeitsbereich 100 angeordnet und mit dem Anschlussabschnitt 101 gekoppelt. Darüber hinaus sind die genannten Stationen beziehungsweise Zellen mit einem Informationsträger versehen, der durch die Erfassungseinheit 32 erfasst werden kann, und einer Steuereinrichtung der Handhabungseinheit 30 oder Bearbeitungsanlage Informationen über den Standort und die Ausrichtung der jeweiligen Einheit überträgt.

Die durch den Informationsträger bereitgestellte Information betrifft insbesondere Daten zu einem lokalen Koordinatensystem sowie weiterführende Informationen zu der an der Zuführstation 11, der ersten Bearbeitungszelle 12, der zweiten Bearbeitungszelle 13 oder der Entnahmestation 14 angeordneten Einheit (Zuführeinrichtung 11a, erste Bearbeitungseinrichtung 12a, zweite Bearbeitungseinrichtung 13a, Entnahmeeinrichtung 14a). Die genannte weiterführende Information kann eine Art und Position der jeweiligen Einheit betreffen, mit der eine Bewegung des Roboterarms 30a im Bereich der Zuführeinrichtung 11a, erste Bearbeitungseinrichtung 12a, zweite Bearbeitungseinrichtung 13a oder Entnahmeeinrichtung 14a präzise gesteuert werden kann.

Die Ausführungsform zeichnet sich dadurch aus, dass sowohl die Bearbeitungsstation 11, die erste und zweite Bearbeitungszelle 12, 13 sowie die Entnahmestation 14 flexibel aus dem Arbeitsbereich 100 entnommen und ggf. durch andere Einheiten ersetzt werden können. Darüber hinaus ist es möglich, die Zuführeinrichtung 11a der Zuführstation 11 zu entnehmen. Entsprechendes gilt für die Bearbeitungseinrichtung 12a, die Bearbeitungseinrichtung 13a sowie die Entnahmeeinrichtung 14a, die entsprechend von der ersten Bearbeitungszelle 12, der zweiten Bearbeitungszelle 13 sowie der Entnahmestation 14 entnommen und ggf. getauscht werden können.

Somit kann die Bearbeitungsanlage 1 spezifisch modifiziert und an sich ändernde Arbeitsaufträge angepasst werden, ohne die Bearbeitungsanlage 1 an sich zu ersetzen. Beispielsweise ist es möglich, eine Bearbeitungszelle, die absehbar keine Verwendung findet, aus der Bearbeitungsanlage 1 zu entnehmen. Freiwerdende oder freigehaltene Plätze in der Bearbeitungsanlage 1 können durch andere Bearbeitungszellen bestückt werden, um zukünftige Arbeitsaufträge bearbeiten zu können oder solche Arbeitsaufträge noch zügiger abzuwickeln.

Obwohl im Rahmen des beschriebenen Ausführungsbeispiels eine Bearbeitungsanlage 1 mit einer bestimmten Anzahl spezifischer Bearbeitungszellen und weiterer Stationen beschrieben wurde, ist ersichtlich, dass die Erfindung nicht auf die Anzahl und Ausgestaltung der beschriebenen Bearbeitungszellen und Stationen oder die Anzahl der in der Bearbeitungsanlage bereitgestellten Plätze hierfür beschränkt ist.

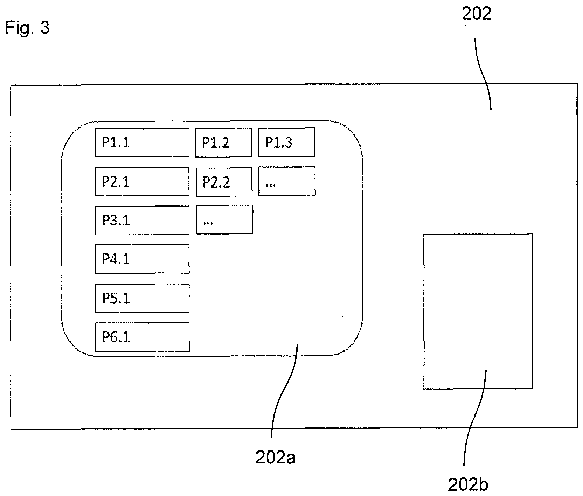

In Fig. 3 wird eine Detailansicht der in Fig. 1 gezeigten Anzeigeeinrichtung 202 dargestellt, um die Bedienung der Bearbeitungsanlage 1 anhand eines Beispiels zu veranschaulichen.

Insbesondere wird an der Anzeigeeinrichtung 202 ein Auftrags-Editor-Programm angezeigt, das ein Programm-Editor-Fenster 202a sowie ein Auswahlfenster 202b umfasst. Im Programm-Editor-Fenster 202a sind mehrere Programmelemente P1.1-P6.1 angeordnet, mit denen ein Bediener einen sequentiellen Programmablauf zusammengestellt hat. Der Bediener der Bearbeitungsanlage 1 kann dabei die Programmelemente P1.1-P6.1 aus einer im Auswahlfenster 202b dargestellten Auswahl an Programmelementen auswählen und zu einer bestimmten Reihenfolge zusammenführen, um auf diese Weise einen Verarbeitungsablauf zusammenzustellen.

Dabei kann gemäß einer weiteren Ausführungsform zusätzlich zu einem sequentiellen Programmablauf, also dem Ablauf gemäß P1.1, P 2.1, P3.1, P4.1 etc., auch ein paralleler Programmablauf zusammengestellt werden. Im Editor-Fenster 202a kann dies in einer horizontalen Ausrichtung mittels der Programmelemente P1.1, P1.2, P2.2 etc. umgesetzt werden. Auf diese Weise wird die Variabilität nochmals gesteigert.

In Fig. 3 wird dabei rein beispielhaft ein Öffnen der Manipulationseinheit 31 (Programmelement P1), ein Bereitstellen einer Leitung (Programmelement P2), ein Schließen der Manipulationseinheit 31 (Programmelement P3) sowie ein Freigeben der Leitung (Programmelement P4) dargestellt. Daraufhin kann mit dem Programmelement P5 eine Bewegung der Handhabungseinheit 30 zu einer bestimmten Bearbeitungszelle eingegeben werden, an der ein bestimmter Bearbeitungsvorgang durchgeführt werden soll. Der Nutzer kann dabei das Programmelement P5 anpassen, um eine bestimmte Zielposition der Bewegung der Handhabungseinheit 30 zu definieren. Diesem Programmschritt folgt wiederum ein Öffnen der Manipulationseinheit 31 (Programmelement P6). Ferner können weitere Programmelemente ergänzt werden, um den Programmablauf zu erweitern.

Dabei können die Programmelemente P1 und P6 entsprechend ausgebildet sein. Der Bediener hat damit den Vorteil, einen Verfahrensablauf vergleichsweise einfach zusammenzustellen. Ferner können einzelne Programmelemente geändert oder ersetzt werden. Ferner ist es möglich, zusätzliche Programmelemente hinzuzufügen, die der Bediener beim Zusammenstellen eines Verarbeitungsablaufs verwenden kann.

Insbesondere kann der Bediener auf einen Cloudspeicher zugreifen, indem beispielsweise seitens des Herstellers weitere Programmelemente (oder aktualisierte Programmelemente) hinterlegt sind.

## Patentansprüche

1. Bearbeitungsanlage (1), umfassend:
einen Arbeitsbereich (100) mit Plätzen für Bearbeitungszellen (12; 13),
zumindest eine Bearbeitungszelle (12; 13) mit einer Bearbeitungseinrichtung (12a; 13a) zur Verarbeitung einer Komponente, insbesondere einer Leitung und/oder eines Kontaktelements, wobei die Bearbeitungszelle (12; 13) im Arbeitsbereich (100) positioniert ist,
eine bewegbare, insbesondere schwenkbare, Handhabungseinheit (30), die eine Manipulationseinheit (31) zum Halten der Komponente aufweist, um die Komponente in den Bereich der Bearbeitungseinrichtung (12a; 13a) zu bewegen, und
eine Erfassungseinheit (32), die eingerichtet ist, die Position der Bearbeitungszelle (12; 13) im Arbeitsbereich (100) zu erfassen.

2. Bearbeitungsanlage (1) gemäß Anspruch 1, wobei die Erfassungseinheit (32) an der Handhabungseinheit (30) angeordnet ist,
wobei bevorzugt ist, dass die Erfassungseinheit (32) eine Kamera, insbesondere eine 2D- oder 3D-Kamera, aufweist.

3. Bearbeitungsanlage (1) gemäß einem der vorangegangenen Ansprüche, **dadurch gekennzeichnet, dass** die Bearbeitungszelle (12; 13) eine wechselbare Bearbeitungseinrichtung (12a; 13a) aufweist.

4. Bearbeitungsanlage (1) gemäß einem der vorangegangenen Ansprüche, **dadurch gekennzeichnet, dass** ein an der Bearbeitungszelle und/oder die Bearbeitungseinrichtung vorgesehener Kennzeichnungselement, insbesondere umfassend einen Barcode, QR-Code, RFID-Chip, vorgesehen ist, wobei bevorzugt ist, dass der Informationsträger auf einen in einer Speichereinheit hinterlegten Datensatz verweist.

5. Bearbeitungsanlage (1) gemäß einem der vorangegangenen Ansprüche, **dadurch gekennzeichnet, dass** die Handhabungseinheit (30) eingerichtet ist, die mit der Erfassungseinheit (32) erfassten Komponente mittels der Manipulationseinheit (31) zu übernehmen und zur Bearbeitungszelle (12; 13) zu bewegen.

6. Bearbeitungsanlage (1) gemäß einem der vorangegangenen Ansprüche, **dadurch gekennzeichnet, dass** die Manipulationseinheit (31) ein Greifer ist, wobei bevorzugt ist, dass die Manipulationseinheit (31) ferner eine Zuführmaske umfasst, die mit der Bearbeitungseinheit der Bearbeitungszelle koppelbar ist.

7. Bearbeitungsanlage (1) gemäß einem der vorangegangenen Ansprüche, **dadurch gekennzeichnet, dass** die Bearbeitungseinrichtung der Bearbeitungszelle eine Crimpvorrichtung umfasst.

8. Bearbeitungsanlage (1) gemäß einem der vorangegangenen Ansprüche, **dadurch gekennzeichnet, dass** die zumindest eine Bearbeitungszelle mit einem, insbesondere optischen oder taktilen, Referenzierungssystem ausgestattet ist, das von der Erfassungseinheit (32) erfassbar ist.

9. Bearbeitungsanlage (1) gemäß einem der vorangegangenen Ansprüche, **dadurch gekennzeichnet, dass** die Plätze für Bearbeitungszellen (12; 13) im Arbeitsbereich (100) kreisförmig angeordnet sind,
wobei bevorzugt ist, dass die Plätze für Bearbeitungszellen (12; 13) Segmente der kreisförmigen Anordnung sind.

10. Bearbeitungsanlage (1) gemäß einem der vorangegangenen Ansprüche, **dadurch gekennzeichnet, dass** die Bearbeitungsanlage (1) einen Bedienbereich (200) umfasst, wobei bevorzugt ist, dass der Bedienbereich (200) durch eine Schutzeinrichtung (201) vom Arbeitsbereich (100) getrennt ist.

11. Bearbeitungsanlage (1) gemäß einem der vorangegangenen Ansprüche, **dadurch gekennzeichnet, dass** die Handhabungseinheit (30) eine Sende-/Empfangseinrichtung aufweist, um auf eine Speichereinheit der Bearbeitungsanlage (1) zuzugreifen.

12. Bearbeitungsanlage (1) gemäß einem der vorangegangenen Ansprüche, **dadurch gekennzeichnet, dass** die Bearbeitungsanlage eine Vielzahl von Bearbeitungszellen aufweist, wobei bevorzugt ist, dass sich Bearbeitungseinrichtungen der Bearbeitungszellen voneinander unterscheiden.

13. Bearbeitungsanlage (1) gemäß einem der vorangegangenen Ansprüche, **dadurch gekennzeichnet, dass** die Bearbeitungsanlage eine Übergabestation (13, 14), insbesondere eine Zuführstation und/oder eine Entnahmestation, umfasst, wobei bevorzugt ist, dass mehrere Übergabestationen an entgegengesetzten Plätzen des Arbeitsbereichs (100) angeordnet sind.

14. Bearbeitungsanlage (1) gemäß einem der vorangegangenen Ansprüche, **dadurch gekennzeichnet, dass** die zumindest eine Bearbeitungszelle (12; 13) beweglich gestaltet ist.

15. Bearbeitungsanlage (1) gemäß einem der vorangegangenen Ansprüche, ferner umfassend eine Steuereinrichtung, die ein Steuerprogramm mit modularen Programmelementen umfasst.
